(19) Europäisches Patentamt / European Patent Office / Office européen des brevets

(11) **EP 3 380 735 B1**

(12) **EUROPÄISCHE PATENTSCHRIFT**

(45) Veröffentlichungstag und Bekanntmachung des Hinweises auf die Patenterteilung:
**28.07.2021   Patentblatt 2021/30**

(51) Int Cl.:
*F04D 29/28* *(2006.01)*      *F04D 29/30* *(2006.01)*
*H02K 9/06* *(2006.01)*

(21) Anmeldenummer: **17718525.3**

(22) Anmeldetag: **20.04.2017**

(86) Internationale Anmeldenummer:
**PCT/EP2017/059425**

(87) Internationale Veröffentlichungsnummer:
**WO 2017/186575 (02.11.2017 Gazette 2017/44)**

(54) **SCHAUFEL EINES LUFTFÖRDERRADS MIT S-FÖRMIGER SCHAUFELKANTENGEOMETRIE**

BLADE OF AN AIR-CONVEYING WHEEL WITH AN S-SHAPED BLADE EDGE GEOMETRY

AUBE D'UNE ROUE D'ACHEMINEMENT D'AIR PRÉSENTANT UN BORD D'AUBE EN S

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.04.2016   DE 102016107656**

(43) Veröffentlichungstag der Anmeldung:
**03.10.2018   Patentblatt 2018/40**

(73) Patentinhaber: **EBM-Papst Mulfingen GmbH&CO. KG**
**74673 Mulfingen (DE)**

(72) Erfinder:
• **CONRAD, Daniel**
  **74243 Langenbrettach (DE)**
• **PFAFF, Christian**
  **74653 Künzelsau (DE)**

(74) Vertreter: **Staeger & Sperling**
**Partnerschaftsgesellschaft mbB**
**Sonnenstraße 19**
**80331 München (DE)**

(56) Entgegenhaltungen:
CN-U- 201 639 437      DE-U1-202013 102 470
US-A1- 2009 184 601

**Beschreibung**

Die Erfindung betrifft eine Schaufel eines Luftförderrads mit einer Schaufelkante mit einer axialseitigen Schaufelkantenkontur, die sich von einer Schaufelvorderkante zu einer Schaufelhinterkante entlang einer vorbestimmten Kurve erstreckt.

Bei Elektromotoren, vor allem bei Außenläufermotoren ist eine ausreichende Kühlung an der Statorbuchse und der Elektronikeinheit wesentlich für die Leistung und Lebensdauer. Eine Verbesserung der Kühlung ist deshalb stets wünschenswert. Im Stand der Technik, beispielsweise der DE 10 2012 107 109 A1, wird hierzu vorgesehen, einen Kühlluftstrom spezifisch entlang zu kühlender Bauteile zu führen. Dies funktioniert in der Praxis bereits sehr gut. Jedoch ist die mögliche Kühlleistung noch nicht vollständig ausgeschöpft. Vielmehr sind neben der Führung des Kühlluftstroms auch Anpassungen des den Kühlluftstrom erzeugenden Laufrads und mithin des Luftstroms selbst möglich, die zudem auch eine Reduzierung der Geräuschentwicklung ermöglichen.

Das Dokument CN 201639437 U offenbart eine Schaufel und ein Luftförderrad aus dem Stand der Technik.

Der Erfindung liegt deshalb die Aufgabe zugrunde, die durch ein Luftförderrad erzeugte Kühlleistung an einem Elektromotor zu erhöhen. Ferner ist Aufgabe der Erfindung, die Geräuschentwicklung durch das Luftförderrad zu reduzieren.

Diese Aufgabe wird durch die Merkmalskombination gemäß Patentanspruch 1 gelöst.

Erfindungsgemäß wird eine Schaufelkante mindestens einer Schaufel eines Luftförderrads mit einer axialseitigen Schaufelkantenkontur vorgesehen, die sich von einer Schaufelvorderkante zu einer Schaufelhinterkante entlang einer Kurve erstreckt, wobei die Schaufelkantenkontur zumindest einen in radialer Richtung an die Schaufelvorderkante angrenzenden Vorderabschnitt, einen in radialer Richtung an die Schaufelhinterkante angrenzenden Hinterabschnitt sowie einen zwischen dem Vorderabschnitt und dem Hinterabschnitt liegenden Mittelabschnitt aufweist. Die Schaufelkantenkontur hat in einem seitlichen Querschnitt gesehen in dem Mittelabschnitt einen S-förmigen Kurvenverlauf und vergrößert dabei eine axiale Höhe der Schaufel in Richtung der Schaufelhinterkante.

Die Schaufeln des Luftförderrads werden erfindungsgemäß über ihre radiale Sehnenlänge mit einer spezifischen Geometrie entlang der axial freien Schaufelkanten ausgestattet, um den Ansaugvolumenstrom und mithin den zur Kühlung vorgesehenen Kühlluftstrom zu erhöhen. Die wellenförmige bzw. S-förmige Ausgestaltung des Mittelbereichs der Schaufelkantenkontur liefert hierbei einen wesentlichen Beitrag. Bei einer axial an die Statorbuchse beziehungsweise die Statorbuchsenkühlrippen eines Elektromotors, insbesondere eines Außenläufermotors, angrenzenden Einbaulage des Luftförderrads führt der axial angesaugte und radial ausgeblasene Kühlluftstrom die Wärme des Motors an die Umgebung in vorteilhafter Weise ab. Hierfür wird ein vorbestimmter (Rand-)Bereich der Statorbuchse mit einer oder mehreren Öffnungen versehen, durch die der Ansaugvolumenstrom gesaugt wird. Durch den sich einstellenden Unterdruck an dem Teil der Statorbuchse ohne Öffnungen entsteht eine Zirkulationsströmung zwischen Statorbuchse und dem Luftförderrad, wodurch die Kühlwirkung weiter erhöht wird.

Durch die erfindungsgemäße Schaufelkantenkontur ist ferner das Spaltmaß der Schaufeln zu angrenzenden Bauteilen, insbesondere zur Statorbuchse oder den Statorbuchsenkühlrippen, über dem Radius variabel. Hierdurch werden niedrigere Schalldruckpegel erreicht und störende Drehtöne beseitigt.

Ferner ist in einer nicht beanspruchten Ausführungsvariante vorgesehen, dass die Statorbuchsenkühlrippen zumindest bezüglich ihrer Axialerstreckung von radial innen nach radial außen eine im Wesentlichen komplementäre Form zu den Schaufeln des Luftförderrads aufweisen. Dies führt zu einer in axialer Richtung gesehen kompakten Bauweise zwischen Luftförderrad und Statorbuchse.

Erfindungsgemäß ist vorgesehen, dass der S-förmige Kurvenverlauf der Schaufelkantenkontur im Mittelabschnitt einer Kurve eines Tangens Hyperbolicus entspricht.

Zudem wird in einer Weiterbildung der Schaufelkante umgesetzt, dass die Schaufelkantenkontur im Vorderabschnitt und im Hinterabschnitt zumindest abschnittsweise einen stetigen Kurvenverlauf aufweist. Vorzugsweise weist die Schaufelkantenkontur im Vorderabschnitt und im Hinterabschnitt über 50-100%, weiter bevorzugt 70-100%, weiter bevorzugt 80-100% ihrer radialen Länge, d.h. Sehnenlänge, einen stetigen Kurvenverlauf auf.

Auch wenn nicht ausgeschlossen ist, dass neben den drei beschriebenen weitere Schaufelkantenabschnitte realisiert werden, grenzen der Vorderabschnitt und der Hinterabschnitt in einer günstigen Ausführung unmittelbar an den Mittelabschnitt an. Dabei ist vorzugsweise vorgesehen, dass die Kurve der Schaufelkantenkontur an den jeweils angrenzenden Übergangspunkten des Vorderabschnitts zum Mittelabschnitt sowie des Hinterabschnitts zum Mittelabschnitt jeweils beidseitig stetig differenzierbar ist, d.h. an den Übergangspunkten zwischen den Abschnitten keine Sprünge des Kurvenverlaufs vorliegen.

Erfindungsgemäß weist der Mittelabschnitt einen Kurvenverlauf entlang der Sehnenlänge s der Schaufel von dem Anfang des Mittelabschnitts $s_{Mittelabschnitt}^{min}$ bis zum Ende des Mittelabschnitts $s_{Mittelabschnitt}^{max}$ auf, der normiert bestimmt ist durch die Formel

$$h(s) = \tanh\left(\frac{s - \left(\frac{s_{Mittelabschnitt}^{min} + s_{Mittelabschnitt}^{max}}{2}\right)}{t}\right) * \frac{h\left(s_{Mittelabschnitt}^{min}\right) + h\left(s_{Mittelabschnitt}^{max}\right)}{2}$$

$$+ h\left(s_{Mittelabschnitt}^{min}\right) + \frac{h\left(s_{Mittelabschnitt}^{min}\right) + h\left(s_{Mittelabschnitt}^{max}\right)}{2}$$

wobei h einer axialen Höhe der Schaufel und s einer Sehnenlänge der Schaufel, die sich von der Schaufelvorderkante zur Schaufelhinterkante erstreckt, entsprechen, wobei h und s jeweils Werte von 0 bis 1 aufweisen, und gilt

$$t \in \,]0, 1\,],$$

$$0,1 \leq s_{Mittelabschnitt}^{min} \leq s_{Mittelabschnitt}^{max},$$

$$s_{Mittelabschnitt}^{min} \leq s_{Mittelabschnitt}^{max} \leq 0,8.$$

In einer vorteilhaften Ausführung weist der Vorderabschnitt einen Kurvenverlauf entlang einer Sehnenlänge s der Schaufel auf, der normiert bestimmt ist durch die Formel

$$h(s) = a \times s + d,$$

wobei h einer axialen Höhe der Schaufel und s der Sehnenlänge der Schaufel, die sich von der Schaufelvorderkante zur Schaufelhinterkante von dem Wert 0 bis 1 erstreckt, entsprechen. Ferner gilt, dass

$$s \in [0, s_{Mittelabschnitt}^{min}\,]$$

und
-0,5≤a≤1 sowie 0<d≤1 und a+d≤1.
Der Hinterabschnitt weist in einer günstigen Ausführung einen Kurvenverlauf entlang der Sehnenlänge s der Schaufel auf, der normiert bestimmt ist durch die Formel

$$h(s) = a \times \left(s - s_{Mittelabschnitt}^{max}\right) + d$$

Ferner gilt, dass

$$s \in [s_{Mittelabschnitt}^{max}, 1\,]$$

und
-0,5≤a≤1 sowie 0<d≤1 und a+d≤1, wobei s, h und d wie vorstehend bezüglich des Vorderabschnitts beschrieben definiert sind.
In einer Weiterbildung der Schaufelkante ist vorgesehen, dass der Vorderabschnitt einen Kurvenverlauf an einem Übergang von einer axialen in eine radiale Erstreckung eine Rundung r aufweist, die bestimmt ist durch $0 \leq r \leq$ H, wobei H unverändert der axialen Maximalhöhe der Schaufel entspricht. Die Rundung liefert einen zusätzlichen Beitrag zur Erhöhung des geförderten Kühlluftstroms.
Ebenfalls vorteilhaft ist eine Ausführung der Erfindung, bei der die Schaufelhinterkante in einer axialen Draufsicht auf die Schaufel eine Abschrägung gegenüber ihrer Radialerstreckung mit einem Winkel $\alpha$ aufweist, wobei gilt 5°<$\alpha$<70°,

weiter bevorzugt 15°<α<60°.

Die Erfindung umfasst ferner ein Luftförderrad mit mindestens einer Schaufel mit einer vorstehend beschriebenen Schaufelkante, die in axialer Richtung zuströmungsfrei, d.h. nicht von einer Deckscheibe bedeckt ist. Dadurch, dass das Luftförderrad keine (rotationssymmetrische) Deckscheibe besitzt, wird der Turbulenzgrad der Strömung zwischen dem Luftförderrad und dem angrenzenden Bauteil am Elektromotor (z.B. Motorflansch) deutlich gesteigert und mithin die Wärmeabfuhr erhöht.

Auch ist eine Verwendung des Luftförderrads Bestandteil der Erfindung, dessen Einbaulage in einem Elektromotor derart erfolgt, dass ein in axialer Richtung an die Schaufelkante angrenzender lichter Kopfspalt K zu einem axial angrenzenden Bauteil des Elektromotors in einem Bereich von 0,02H<K<0,4H liegt, wobei H auch hier der axialen Maximalhöhe der Schaufel entspricht.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

Fig. 1    eine seitliche Querschnittsansicht einer Schaufel eines Luftförderrads;
Fig. 2    eine Draufsicht auf die Schaufel gemäß Fig. 1,
Fig. 3    eine Seitenansicht auf einen Außenläufermotor mit integriertem Luftförderrad mit einer Schaufelgeometrie gemäß Fig. 1.

Gleiche Bezugszeichen benennen gleiche Teile in allen Ansichten.

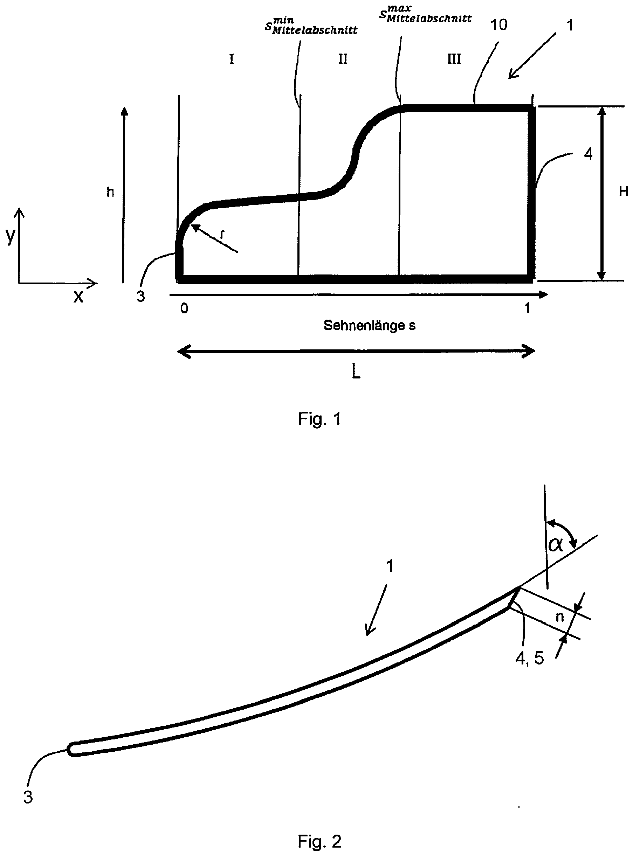

In Figur 1 ist ein Ausführungsbeispiel einer Schaufel 1 eines Luftförderrads 2 mit einer Schaufelkante 10, die eine axialseitige, sich von der Schaufelvorderkante 3 zu der Schaufelhinterkante 4 entlang einer in drei Abschnitten unterteilten Kurve erstreckende Schaufelkantenkontur aufweist, dargestellt. In radialer Richtung, entlang der Sehnenlänge s gesehen, grenzt an die Schaufelvorderkante 3 der Vorderabschnitt I an, der unmittelbar in den Mittelabschnitt II übergeht. An den Mittelabschnitt II grenzt unmittelbar der Hinterabschnitt III an, wobei der Hinterabschnitt III mit der Schaufelhinterkante 4 abschließt.

Der Vorderabschnitt I weist einen Kurvenverlauf mit einer Rundung r am Übergang von der axialen in die radiale Erstreckung der Schaufelkantenkontur auf, die in der gezeigten Ausführung einem Wert von r=5 entspricht, wobei H mit H=16,5 die axiale Maximalhöhe der Schaufel 1 ist. Die Schaufelkantenkontur im Vorderabschnitt I entspricht einer liegenden Parabel, wobei die axiale Höhe h der Schaufel 1 in Richtung des sich anschließenden Mittelabschnitts zunimmt. Über einen Abschnitt von über 50% der Radialerstreckung weist die Schaufelkantenkontur im Vorderabschnitt I einen stetigen Kurvenverlauf auf.

Im sich radial entlang der Sehnenlänge anschließenden Mittelabschnitt II hat die Schaufelkantenkontur einen S-förmigen Kurvenverlauf. Dabei vergrößert sich die axiale Höhe h der Schaufel 1 in Richtung der Schaufelhinterkante 4 zunächst geringfügig. Beim Eintritt in die S-Form steigt die axiale Höhe h stark an, um in Richtung des Hinterabschnitts III flach auszulaufen. Der Kurvenverlauf in dem Mittelabschnitt II entspricht einem Tangens Hyperbolicus, wie nachstehend näher beschrieben.

Im Hinterabschnitt verläuft die Kurve der Schaufelkantenkontur über ihre gesamte radiale Sehnenlänge stetig und im Wesentlichen ohne Steigung bis zur Schaufelhinterkante 4. Die Kurve der Schaufelkantenkontur der Schaufelkante 10 ist an den jeweils angrenzenden Punkten des Vorderabschnitts I und Mittelabschnitts II sowie des Hinterabschnitts III und des Mittelabschnitts II jeweils beidseitig stetig differenzierbar und mithin ohne Sprünge. Sowohl die Schaufelvorderkante 3 als auch die Schaufelhinterkante 4 verlaufen axial geradlinig.

Der Kurvenverlauf der Schaufelkantenkontur ist im Vorderabschnitt I im nichtgerundeten Bereich durch die Gleichung

$$\mathrm{h(s)} = a \times s + d$$

definiert, wobei in der gezeigten Ausführung gilt:
Vorderabschnitt:
a=0 und d=6/16,5

Der Kurvenverlauf der Schaufelkantenkontur ist im Hinterabschnitt III durch die Gleichung

$$\mathrm{h(s)} = a \times (s - s_{Mittelabschnitt}^{max}) + d$$

definiert, wobei in der gezeigten Ausführung gilt:
Hinterabschnitt:

a=0 und d=1

Dabei ist

$$s = \frac{x}{L} \text{ mit } x \in [0, L]$$

und $h = \frac{y}{H} \text{ mit } x \in [0, H],$ mit L=24 und H=16,5.

Der Kurvenverlauf der Schaufelkantenkontur ist im Mittelabschnitt II durch die Gleichung

$$h(s) = \tanh\left(\frac{s - \left(\frac{s_{Mittelabschnitt}^{min} + s_{Mittelabschnitt}^{max}}{2}\right)}{t}\right) * \frac{h(s_{Mittelabschnitt}^{min}) + h(s_{Mittelabschnitt}^{max})}{2} + h(s_{Mittelabschnitt}^{min}) + \frac{h(s_{Mittelabschnitt}^{min}) + h(s_{Mittelabschnitt}^{max})}{2}$$

definiert, wobei in der gezeigten Ausführung gilt:

$$s_{Mittelabschnitt}^{min} = 0,3$$

$$s_{Mittelabschnitt}^{max} = 0,7$$

$$h(s_{Mittelabschnitt}^{min}) = \frac{6}{16,5}$$

$$h(s_{Mittelabschnitt}^{max}) = 1$$

$$t = \frac{tAusführung}{L}$$

mit

$$tAusführung \in \, ]0, L]$$

Figur 2 zeigt eine Querschnittsansicht der Schaufel 1 aus Figur 1 in einer Draufsicht. Die Schaufel 1 verläuft bogenförmig von ihrer Schaufelvorderkante 3 zu ihrer Schaufelhinterkante 4. Die Schaufelvorderkante 3 ist gerundet. Die Schaufelhinterkante 4 weist die Abschrägung 5 gegenüber der Radialerstreckung der Schaufel 1 mit einem Winkel α=60° auf. Bei der gezeigten Ausführung entspricht die Breite n der Schaufel 1 entlang der Abschrägung 5 in Projektion ca. 5% der Sehnenlänge s. Bei herkömmlichen Außenläufermotoren für Ventilatoren liegt der Wert für n vorzugsweise zwischen 2 und 15mm.

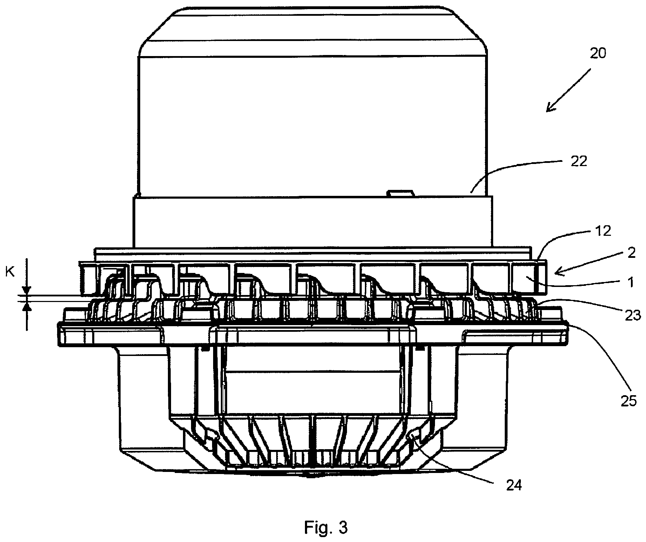

In Figur 3 ist eine Einbaulage eines Luftförderrads 2 mit einer Schaufelgeometrie einer Schaufel 1 gemäß Fig. 1 in einem Außenläufermotor 20 gezeigt. Das Luftförderrad 2 weist eine Bodenscheibe 12 auf, ist jedoch entlang der Schaufelkanten 10 in axialer Richtung zuströmungsfrei, d.h. ohne Deckscheibe und vollständig unbedeckt. Der Außenläufermotor 20 umfasst eine Statorbuchse 25, eine Vielzahl von in Umfangsrichtung jeweils beabstandet zueinander angeordnete und sich in axialer Richtung erstreckende Statorbuchsenkühlrippen 23 sowie einen Rotor 22. Weitere Bauteile des Außenläufermotors 20 entsprechen beispielsweise denjenigen des eingangs zitierten Stands der Technik. In der Statorbuchse 25 ist eine Ansaugöffnung 24 vorgesehen, über die das Luftförderrad 2 im Betrieb den Kühlluftstrom ansaugt und radial ausbläst. Die angesaugte Luft strömt entlang der aufgeheizten Bauteile wie dem Elektronikgehäuse und der Statorbuchse und führt die Wärme ab. Die axial freien Schaufelkanten 10 liegen den ebenfalls axial freien Statorbuchsenkühlrippen 23 unmittelbar gegenüber und sind über den Kopfspalt K beabstandet, der in der gezeigten Ausführung in seiner Größe bestimmt ist durch K=0,15H. Die Schaufelkanten 10 weisen bezüglich ihrer Axialerstreckung eine komplementäre Form zu den Statorbuchsenkühlrippen 23 auf, so dass der Kopfspalt K über die Sehnenlänge s konstant ist.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise können die Schaufelvorderkante als auch die Schaufelhinterkante in axialer Richtung auch abgeschrägt verlaufen. Der Schutzbereich der Erfindung ist durch die nachfolgenden Ansprüche bestimmt.

## Patentansprüche

1. Schaufel (1) eines radial fördernden Luftförderrads (2) mit einer Schaufelkante mit axialseitiger Schaufelkantenkontur, die sich von einer Schaufelvorderkante (3) zu einer Schaufelhinterkante (4) entlang einer Kurve erstreckt, wobei die Schaufelkantenkontur zumindest einen in radialer Richtung an die Schaufelvorderkante (3) angrenzenden Vorderabschnitt (I), einen in radialer Richtung an die Schaufelhinterkante (4) angrenzenden Hinterabschnitt (III) sowie einen zwischen dem Vorderabschnitt (I) und dem Hinterabschnitt (III) liegenden Mittelabschnitt (II) aufweist, wobei die Schaufelkantenkontur in einem seitlichen Querschnitt gesehen in dem Mittelabschnitt (II) einen S-förmigen Kurvenverlauf hat und sich dabei eine axiale Höhe h der Schaufel (1) in Richtung der Schaufelhinterkante (4) vergrößert, **dadurch gekennzeichnet, dass** der Mittelabschnitt (II) einen Kurvenverlauf entlang einer Sehnenlänge s der Schaufel von einem Anfang des Mittelabschnitts $s_{Mittelabschnitt}^{min}$ bis zu einem Ende des Mittelabschnitts $s_{Mittelabschnitt}^{max}$ aufweist, der normiert bestimmt ist durch die Formel

$$h(s) = \tanh\left(\frac{s - \left(\frac{s_{Mittelabschnitt}^{min} + s_{Mittelabschnitt}^{max}}{2}\right)}{t}\right) * \frac{h(s_{Mittelabschnitt}^{min}) + h(s_{Mittelabschnitt}^{max})}{2}$$
$$+ h(s_{Mittelabschnitt}^{min}) + \frac{h(s_{Mittelabschnitt}^{min}) + h(s_{Mittelabschnitt}^{max})}{2}$$

   wobei h einer axialen Höhe der Schaufel (1) und s einer Sehnenlänge der Schaufel (1), die sich von der Schaufelvorderkante (3) zur Schaufelhinterkante (4) erstreckt, entsprechen, wobei h und s jeweils Werte von 0 bis 1 aufweisen, und gilt $t \in {]}0, 1]$,

$$0{,}1 \leq s_{Mittelabschnitt}^{min} \leq s_{Mittelabschnitt}^{max} ,$$

$$s_{Mittelabschnitt}^{min} \leq s_{Mittelabschnitt}^{max} \leq 0{,}8 .$$

2. Schaufel nach Anspruch 1, **dadurch gekennzeichnet, dass** die Schaufelkantenkontur im Vorderabschnitt (I) und im Hinterabschnitt (III) zumindest abschnittsweise einen stetigen Kurvenverlauf aufweist.

3. Schaufel nach dem vorigen Anspruch, **dadurch gekennzeichnet, dass** die Schaufelkantenkontur im Vorderabschnitt (I) und im Hinterabschnitt (III) über 50-100% ihrer radialen Länge einen stetigen Kurvenverlauf aufweist.

4. Schaufel nach zumindest einem der vorigen Ansprüche, **dadurch gekennzeichnet, dass** der Vorderabschnitt (I) und der Hinterabschnitt (III) unmittelbar an den Mittelabschnitt (II) angrenzen.

5. Schaufel nach dem vorigen Anspruch, **dadurch gekennzeichnet, dass** die Kurve der Schaufelkantenkontur an den jeweils angrenzenden Punkten des Vorderabschnitts (I) und Mittelabschnitts (II) sowie des Hinterabschnitts (III) und des Mittelabschnitts (II) jeweils beidseitig stetig differenzierbar ist.

6. Schaufel nach zumindest einem der vorigen Ansprüche, **dadurch gekennzeichnet, dass** der Vorderabschnitt (I) einen Kurvenverlauf entlang einer Sehnenlänge s der Schaufel (1) aufweist, der normiert bestimmt ist durch die Formel

$$h(s) = a \times s + d$$

wobei h einer axialen Höhe der Schaufel und s einer Sehnenlänge der Schaufel, die sich von der Schaufelvorderkante (3) zur Schaufelhinterkante (4) von dem Wert 0 bis 1 erstreckt, entsprechen und gilt:

$$s \in [0, s_{Mittelabschnitt}^{min}]$$

und

$$-0,5 \leq a \leq 1,$$

$$0 < d \leq 1,$$

$$a + d \leq 1.$$

7. Schaufel nach zumindest einem der vorigen Ansprüche, **dadurch gekennzeichnet, dass** der Hinterabschnitt (III) einen Kurvenverlauf entlang einer Sehnenlänge s der Schaufel aufweist, der normiert bestimmt ist durch die Formel

$$h(s) = a \times (s - s_{Mittelabschnitt}^{max}) + d$$

wobei h einer axialen Höhe der Schaufel (1) und s einer Sehnenlänge der Schaufel (1), die sich von der Schaufelvorderkante (3) zur Schaufelhinterkante (4) von dem Wert 0 bis 1 erstreckt, entsprechen und gilt:

$$s \in [s_{Mittelabschnitt}^{max}, 1]$$

und

$$-0,5 \leq a \leq 1,$$

$$0 < d \leq 1,$$

$$a + d \leq 1.$$

8. Schaufel nach zumindest einem der vorigen Ansprüche, **dadurch gekennzeichnet, dass** der Vorderabschnitt (I) einen Kurvenverlauf an einem Übergang von einer axialen in eine radiale Erstreckung eine Rundung r aufweist, die bestimmt ist durch $0 \leq r \leq H$, wobei H der axialen Maximalhöhe der Schaufel (1) entspricht.

9. Schaufel nach zumindest einem der vorigen Ansprüche, **dadurch gekennzeichnet, dass** die Schaufelhinterkante (4) in einer axialen Draufsicht auf die Schaufel (1) eine Abschrägung (5) gegenüber einer Radialerstreckung der Schaufel (1) mit einem Winkel $\alpha$ aufweist, wobei gilt $5° < \alpha < 70°$.

10. Luftförderrad mit mindestens einer Schaufel (1) mit einer Schaufelkante (10) nach zumindest einem der vorigen Ansprüche, wobei die Schaufelkante (10) in axialer Richtung zuströmungsfrei, d.h. unbedeckt ist.

11. Verwendung eines Luftförderrads (2) nach dem vorigen Anspruch in einem Elektromotor, **dadurch gekennzeichnet, dass** dessen Einbaulage in dem Elektromotor derart erfolgt, dass ein in axialer Richtung an die Schaufelkante (10) angrenzender lichter Kopfspalt (K) zu einem axial angrenzenden Bauteil des Elektromotors in einem Bereich von 0,02H<K<0,4H liegt, wobei H der axialen Maximalhöhe der Schaufel (1) entspricht.

**Claims**

1. Blade (1) of a radially conveying air conveying wheel (2) having a blade edge having an axial-side blade edge contour which extends from a blade leading edge (3) to a blade trailing edge (4) along a curve, wherein the blade edge contour has at least one front section (I) which is adjacent to the blade leading edge (3) in the radial direction, a rear section (III) radially adjacent to the blade trailing edge (4), and a central section (II) located between the front section (I) and the rear section (III), the blade edge contour having an S-shaped curve in the central section (II), as seen in a lateral cross section, and an axial height h of the blade (1) increasing in the direction of the blade trailing edge (4), **characterized in that** the center section (II) has a curve progression along a chord length s of the blade from a beginning of the center section $s_{central\ section}^{min}$ to an end of the center section $s_{central\ section}^{max}$, which is determined in a normalized manner by the formula

$$h(s) = \tanh\left(\frac{s - \left(\frac{s_{central\ section}^{min} + s_{central\ section}^{max}}{2}\right)}{t}\right) * \frac{h(s_{central\ section}^{min}) + h(s_{central\ section}^{max})}{2} + h(s_{central\ section}^{min}) + \frac{h(s_{central\ section}^{min}) + h(s_{central\ section}^{max})}{2}$$

where h corresponds to an axial height of the blade (1) and s corresponds to a chord length of the blade (1) extending from the blade leading edge (3) to the blade trailing edge (4), where h and s each have values from 0 to 1, and and t ∈ [0, 1],

$$0.1 \leq s_{central\ section}^{min} \leq s_{central\ section}^{max},$$

$$s_{central\ section}^{min} \leq s_{central\ section}^{max} \leq 0.8.$$

2. Blade according to claim 1, **characterized in that** the blade edge contour in the front section (I) and in the rear section (III) has a continuous curve at least in sections.

3. Blade according to the preceding claim, **characterized in that** the blade edge contour in the front section (I) and in the rear section (III) has a continuous curve over 50-100% of its radial length.

4. Blade according to at least one of the preceding claims, **characterized in that** the front section (I) and the rear section (III) are directly adjacent to the middle section (II).

5. Blade according to the preceding claim, **characterized in that** the curve of the blade edge contour at the respective adjacent points of the front section (I) and middle section (II) as well as of the rear section (III) and middle section (II) respectively are continuously differentiable on both sides.

6. Blade according to at least one of the preceding claims, **characterized in that** the front section (I) has a curve along a chord length s of the blade (1) which is determined in a normalized manner by the formula

$$h(s) = a \times s + d$$

where h corresponds to an axial height of the blade and s corresponds to a chord length of the blade extending from the leading edge (3) of the blade to the trailing edge (4) of the blade from the value 0 to 1 and wherein

$$s \in [0, s_{central\ section}^{min}]$$

and

$$-0{,}5 \leq a \leq 1,$$

$$0 < d \leq 1,$$

$$a + d \leq 1.$$

7. Blade according to at least one of the preceding claims, **characterized in that** the rear section (III) has a curve along a chord length s of the blade which is determined in a normalized manner by the formula

$$h(s) = a \times (s - s_{central\ section}^{max}) + d$$

where h corresponds to an axial height of the blade (1) and s corresponds to a chord length of the blade (1) extending from the blade leading edge (3) to the blade trailing edge (4) from the value 0 to 1 and wherein

$$s \in [0, s_{central\ section}^{max}, 1]$$

and

$$-0{,}5 \leq a \leq 1,$$

$$0 < d \leq 1,$$

$$a + d \leq 1.$$

8. Blade according to at least one of the preceding claims, **characterized in that** the front portion (I) has a curve progression in a transition from an axial extent to a radial extent having a rounding r which is determined by $0 \leq r \leq H$, wherein H corresponds to the axial maximum height of the blade (1).

9. Blade according to at least one of the preceding claims, **characterized in that** the blade trailing edge (4), in an axial plan view of the blade (1), has a bevel (5) with respect to a radial extent of the blade (1) with an angle a, where $5° < \alpha < 70°$.

10. Air conveying wheel with at least one blade (1) with a blade edge (10) according to at least one of the preceding claims, wherein the blade edge (10) is free of inflow in the axial direction, i.e. uncovered.

11. Method of using an air impeller (2) according to the preceding claim in an electric motor, **characterized in that** the installation position of said air impeller (2) in the electric motor is such that a light head gap (K) adjacent to the blade edge (10) in the axial direction with respect to an axially adjacent component of the electric motor lies in a range of $0.02H < K < 0.4H$, wherein H corresponds to the axial maximum height of the blade (1).

**Revendications**

1. Pale (1) d'une roue de ventilation (2) à débit radial, comprenant un bord de pale doté d'un contour de bord de pale côté axial qui s'étend d'un bord d'attaque de pale (3) à un bord de fuite de pale (4) le long d'une courbe, le contour de bord de pale présentant au moins une partie avant (I) adjacente au bord d'attaque de pale (3) dans la direction radiale, une partie arrière (III) adjacente au bord de fuite de pale (4) dans la direction radiale, ainsi qu'une partie centrale (II) située entre la partie avant (I) et la partie arrière (III), le contour de bord de pale, vu en section transversale latérale, présentant dans la partie centrale (II) une allure de courbe en forme de S, et une hauteur axiale h de la pale (1) augmentant alors en direction du bord de fuite de pale (4), **caractérisée en ce que** la partie centrale (II) présente une allure de courbe le long d'une longueur de corde s de la pale d'un début de la partie centrale $s_{partie\ centrale}^{min}$ jusqu'à une fin de la partie centrale $s_{partie\ centrale}^{max}$ est déterminée de manière normalisée par la formule

$$h(s) = \tanh\left(\frac{s - \left(\frac{s_{partie\ centrale}^{min} + s_{partie\ centrale}^{max}}{2}\right)}{t}\right)$$

$$* \frac{h\left(s_{partie\ centrale}^{min}\right) + h\left(s_{partie\ centrale}^{max}\right)}{2} + h\left(s_{partie\ centrale}^{min}\right)$$

$$+ \frac{h\left(s_{partie\ centrale}^{min}\right) + h\left(s_{partie\ centrale}^{max}\right)}{2}$$

où h est une hauteur axiale de la pale (1), et s est une longueur de corde de la pale (1) qui s'étend du bord d'attaque de pale (3) au bord de fuite de pale (4), h et s ayant des valeurs de 0 à 1 respectivement, et avec la condition que :

$$t \in ]0,1],$$

$$0,1 \leq s_{partie\ centrale}^{min} \leq s_{partie\ centrale}^{max},$$

$$s_{partie\ centrale}^{min} \leq s_{partie\ centrale}^{max} \leq 0,8.$$

2. Pale selon la revendication 1, **caractérisée en ce que** le contour de bord de pale présente dans la partie avant (I) et dans la partie arrière (III) au moins par endroits une allure de courbe continue.

3. Pale selon la revendication précédente, **caractérisée en ce que** le contour de bord de pale présente dans la partie avant (I) et dans la partie arrière (III) une allure de courbe continue sur 50 à 100 % de sa longueur radiale.

4. Pale selon au moins l'une des revendications précédentes, **caractérisée en ce que** la partie avant (I) et la partie arrière (III) sont directement adjacentes à la partie centrale (II).

5. Pale selon la revendication précédente, **caractérisée en ce que** la courbe du contour de bord de pale est respectivement différenciable en continu des deux côtés aux points respectivement adjacents de la partie avant (I) et de la section centrale (II) ainsi que de la partie arrière (III) et de la section centrale (II).

6. Pale selon au moins l'une des revendications précédentes, **caractérisée en ce que** la partie avant (I) présente une allure de courbe le long d'une longueur de corde s de la pale (1) qui est déterminée de manière normalisée par la formule

$$h(s) = \alpha \times s + d,$$

où h est une hauteur axiale de la pale, et s est une longueur de corde de la pale qui s'étend du bord d'attaque de pale (3) au bord de fuite de pale (4) ayant une valeur de 0 à 1, et avec la condition que :

$$s \in \left[0, s_{partie\ centrale}^{min}\right],$$

et

$$-0,5 \le a \le 1,$$

$$0 < d \le 1,$$

$$a + d \le 1.$$

7.  Pale selon au moins l'une des revendications précédentes, **caractérisée en ce que** la partie arrière (III) présente une allure de courbe le long d'une longueur de corde s de la pale qui est déterminée de manière normalisée par la formule

$$h(s) = \alpha \times (s_{partie\ centrale}^{max}) + d,$$

où h est une hauteur axiale de la pale (1), et s est une longueur de corde de la pale (1) qui s'étend du bord d'attaque de pale (3) au bord de fuite de pale (4) ayant une valeur de 0 à 1, et avec la condition que :

$$s \in \left[s_{partie\ centrale}^{max}, 1\right],$$

et

$$-0,5 \le a \le 1,$$

$$0 < d \le 1,$$

$$a + d \le 1.$$

8.  Pale selon au moins l'une des revendications précédentes, **caractérisée en ce que** la partie avant (I) présente une allure de courbe au niveau d'une transition d'une extension axiale à une extension radiale avec un arrondi r qui est déterminé par $0 \le r \le H$, où H est la hauteur maximale axiale de la pale (1).

9.  Pale selon au moins l'une des revendications précédentes, **caractérisée en ce que** dans une vue de dessus axiale sur la pale (1), le bord de fuite de pale (4) présente une inclinaison (5) par rapport à une extension radiale de la pale (1) d'un angle a, avec la condition que $5° < \alpha < 70°$.

10. Roue de ventilation comprenant au moins une pale (1) dotée d'un bord de pale (10) selon au moins l'une des revendications précédentes, le bord de pale (10) étant sans flux entrant dans la direction axiale, c'est-à-dire non couvert.

11. Utilisation d'une roue de ventilation (2) selon la revendication précédente dans un moteur électrique, **caractérisée en ce que** sa position de montage dans le moteur électrique est telle qu'un entrefer de tête libre (K), adjacent au bord de pale (10) dans la direction axiale, se situe par rapport à un composant axialement adjacent du moteur électrique dans une plage de 0,02H < K < 0,4H, où H est la hauteur maximale axiale de la pale (1).

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012107109 A1
- CN 201639437 U